# EUROPEAN PATENT SPECIFICATION

(11) **EP 1 456 051 B1**
(45) Date of publication and mention of the grant of the patent: **01.02.2006**
(21) Application number: 02805456.7
(22) Date of filing: 20.12.2002
(51) Int. Cl.: B60K 15/04

(54) **One-way valve assembly for a fuel tank**
Rückschlagventil für einen Kraftstoff-EInfüllstutzen
Clapet non-retour pour un tube de remplissage

(30) Priority: 21.12.2001 US 24252
(43) Date of publication of application: 15.09.2004
(73) Proprietor: Eaton Corporation, Cleveland, Ohio 44114 (US)
(72) Inventor: KRISHNAMOORTHY, PK, Haridass, Ypsilanti, MI 48197 (US); MARTIN, Charles, J., Ann Arbor, MI 48108 (US); ZORINE, Maxim, V., Ann Arbor, MI 48105 (US); VERZYL, Steven, A., Ypsilanti, MI 48198 (US); BENJEY, Robert, P., Dexter, MI 48130 (US)
(74) Representative: Rüger, Barthelt & Abel Patentanwälte
(86) International application number: PCT/IB2002/005550
(87) International publication number: WO 2003/053732

(56) References cited:
- EP-A- 0 857 602
- EP-A- 0 955 199
- EP-A- 1 024 046
- DE-C- 19 714 813
- DE-U- 20 001 334
- US-A- 4 986 439
- US-A- 5 431 199
- US-A- 5 535 772
- US-A- 5 732 840
- US-B1- 6 234 195
- US-B1- 6 240 957
- US-B1- 6 260 578
- US-B1- 6 296 014
- US-B1- 6 305 408

## Description

### BACKGROUND OF THE INVENTION

The present invention relates to filling systems for vehicle fuel tanks and particularly tanks of the type which have a remotely accessible filler tube, for example, of the type accessible through a fuel filler door mounted on the side of the vehicle. Fuel tank installations of this sort are commonly employed on passenger cars and light trucks where it is desired to have the fuel tank filler recessed within the vehicle body and covered by a filler door which blends with the side structure of the vehicle for esthetic or styling purposes.

Vehicle fuel tank filler systems require a positive seal of the filler tube or "neck" when the filler nozzle is removed in order to meet mandatory fuel vapor emission requirements; and, thus it has been the practice to provide a one-way valve, typically in the form of a flapper door valve to close the filler tube when fuel is not being introduced to the filler tube during refueling.

It is known to provide a fuel tank filler tube check valve in the filler tube assembly externally of the fuel tank when the filler tube nozzle receiver is attached to the filler tube upon installation of the tank onto the vehicle during manufacturing of the vehicle. However, this arrangement requires the handling of separate filler tube hose connections and the check valve on the vehicle assembly line and thus increases the number of parts or components to be supplied to the assembly line and the complexity of vehicle assembly.

The problem is further complicated by the fact that present vehicle production utilizes both plastic and metal fuel tanks which require two different types of attachment of the filler tube thereto. Thus, it has been desired to provide a way or means of incorporating a single, fuel tank filler tube check valve which may be employed in a pre-assembled package with a fuel tank of either metal or plastic material without the need for having two different check valve arrangements. Furthermore, it has been desired to provide such a fuel tank filler tube check valve arrangement which will readily accept a siphon tube or hose therethrough for removing fuel from the tank in the event that service or replacement of the fuel tank is required.

It has also long been desired to provide a vehicle fuel tank with the filler tube assembly attached thereto and the one-way check valve incorporated therein as a complete tank subassembly ready for installation on the vehicle.

US patent no. 5,431,199 discloses a value with features a, b, c of claim 1 and a fluible annular seal, in particular a redundant seal for a vehicle filler neck comprising a vaportight seal door assembly mounted in the upper end of a vehicle fuel system filler pipe. The seal door is normally biased to a closed position to create a vaportight seal between the fuel tank and the filler pipe inlet normally closed by a cap. The seal door yields upon insertion of a dispenser nozzle to permit refueling. It comprises an upper portion and a lower portion manufactured separately and subsequently assembled by cramping or other suitable mechanical connections. The pot-like upper portion has a nozzle-contacting surface that helps to ensure that a dispenser nozzle inserted into the filler tube does not come into contact wit the seal of the door. A somewhat similar closure assembly for a tank filler neck is disclosed in US patent no. 5.732,840. A pivotably supported flapper door is provided that includes a circular plate comprising a raised axially outwardly directed nozzle-engaging surface for engaging a pump nozzle when said pump nozzle penetrates the closure assembly.

### BRIEF SUMMARY OF THE INVENTION

The present invention as it is defined in claim 1 provides a solution to the above-described problem of designing a fuel filler tube or neck assembly including a one-way check valve which may be pre-assembled to the fuel tank and including a nozzle receiving receptacle on the end of the filler tube. The filler tube assembly of the present invention includes a one-way valve for check valve and may be pre-assembled to either a metal fuel tank or a plastic fuel tank. The filler tube assembly including the one-way check valve of the present invention readily accepts a siphon hose inserted through the filler nozzle receiving receptacle end of the filler tube assembly and permits passage of the siphon hose through the one-way valve into the fuel tank without the risk of the end of the siphon hose being caught or sticking in the one-way valve or damaging the elastomeric seal for the one-way valve.

### BRIEF DESCRIPTION OF THE DRAWINGS

FIG. 1 is a cross-section of a portion of a metal fuel tank having the filler tube and check valve assembly of the present invention attached thereto;

FIG. 2 is a view similar to FIG. 1 of an alternate embodiment of the invention installed on a plastic fuel tank;

FIG. 3 is a cross-section of an embodiment of the valve employed in the assembly of FIG. 1;

FIG. 4 is an alternate embodiment of the valve for employment in the system of FIG. 2;

FIG. 5 is an arrangement of the valve of FIG. 3 for use in the system of FIG. 2; and,

FIG. 6 is an exploded view of the valve of FIG. 3.

### DETAILED DESCRIPTION OF THE INVENTION

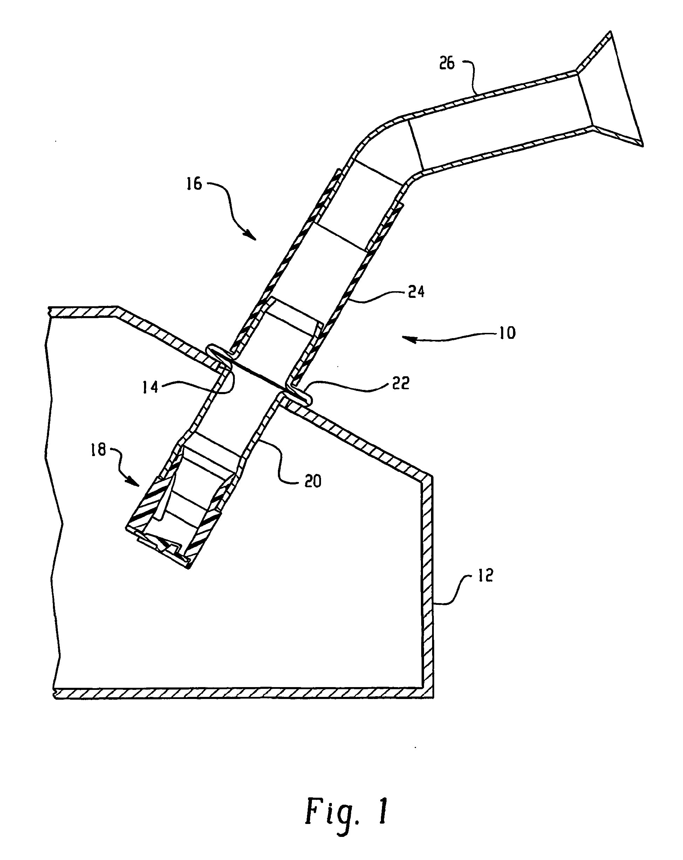

Referring to FIG. 1, a fuel tank and filler tube assembly employing the present invention is indicated generally at 10 and is shown as applied to a metal fuel tank 12 having an access opening 14 formed in the upper wall thereof with a filler tube assembly including a one-way valve indicated generally at 16 received therethrough and secured thereon. The assembly 16 includes a one-way valve indicated generally at 18 with a metal attachment tube 20 having one end thereof received over the valve 18; and, tube 20 may include an annular convolution 22 formed thereon and may be secured over the opening 22 and sealed thereon by any suitable expedient as, for example, weldment to the tank 12.

The upper end of the tube 20 extends outwardly of the tank and has received thereover a filler hose, preferably of elastomeric material as denoted by reference numeral 24 with the lower end thereof received over the upper end of tube 20. The upper end of the hose 24 may have received therein a nozzle receiving receptacle tube 26 which has the upper end thereof open and adapted for receiving therein a refueling nozzle (not shown).

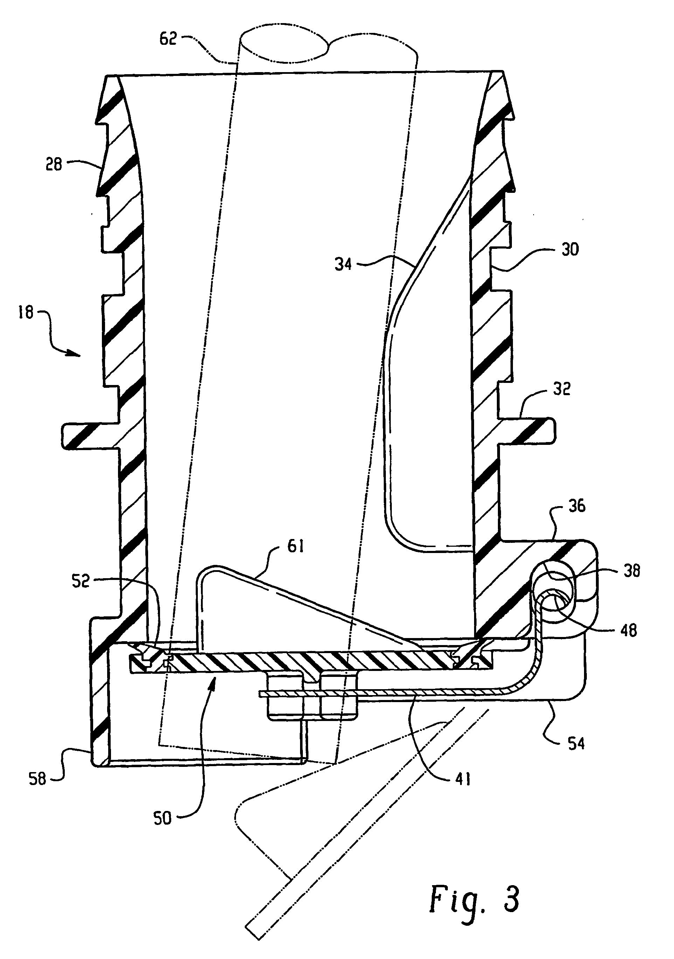

Referring to FIG. 3, the valve 18 is shown in cross-section and enlarged and includes a tubular body 28 having the upper end thereof provided with an annular barb with a seal ring groove 30 formed therein; and, an annular mounting flange 32 may be provided if desired, intermediate the ends of tube 28 and below the seal ring groove 30. The inner periphery of the tube 28 has at least one and preferably a plurality of circumferentially spaced radially inwardly extending ribs 34 formed therein.

The lower end of the tube 28 has a projection 36 extending outwardly therefrom and circumferentially aligned with ribs 34. The projection 36 has formed therein a slot 38 which is elongated in the axial direction of the tube and which has received therein a torsion spring 48 which has one end thereof extending radially inwardly over the end of the tube 28.

The tube 28 is preferably formed of plastic and may have electrically conductive material interspersed therein for facilitating discharge of accumulated static electrical charge.

A moveable valve member which may be configured as a flapper is indicated generally at 50 and is disposed over the end of the tube 28 and has an annular resilient preferably elastomeric seal 52 secured about the periphery thereof for sealing contact with the lower end of the tube 28. The valve member 50 has a pair of arms 54 extending outwardly therefrom on opposite sides of the valve member 50 with each of the arms having an inwardly extending trunnion 56 formed thereon. Upon attachment of valve member 50 each of the arms 54 is deflected; and, the trunnions 56 are each respectively engaged in an opposite end of the slot 38 on the projection 36 thereby forming hinges for pivotal movement of the valve member 50 about the end of the tube 28. A partially circumferentially extending shield or shroud 58 is formed about the lower end opening of the tube 28 and about the valve member 50.

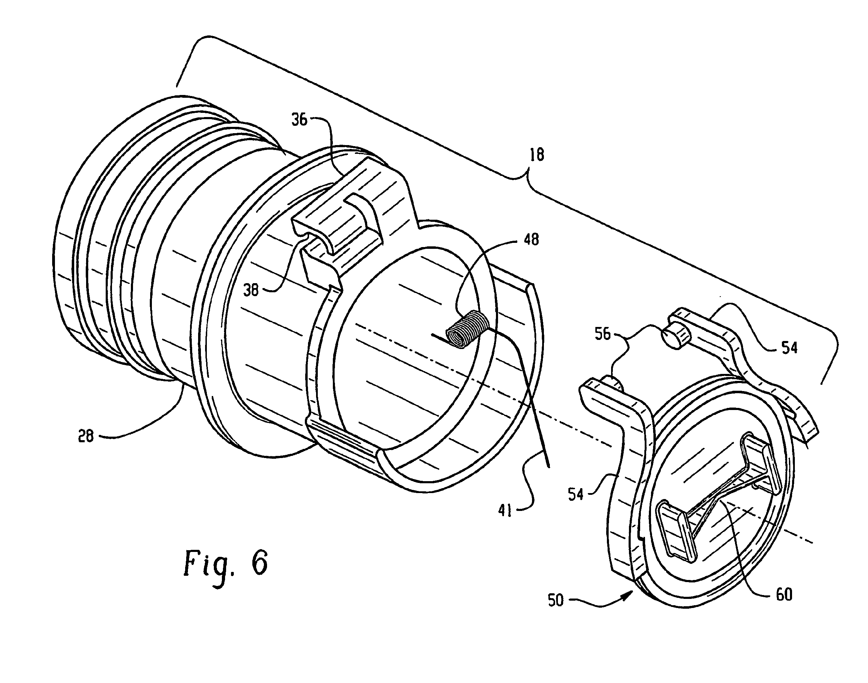

The inwardly extending end 41 of the torsion spring 48 slidably engages a raised contact surface 60 (see FIG. 6) provided on the outer face of the valve member 50.

It will be understood that the trunnions 56 are free for limited lost motion movement in an axial direction within the slot 38 thereby permitting the force of the end 41 of the torsion spring to be centrally applied to the valve member 50 at surface 60 and to permit the valve member 50 to self-align for seating on the end of the tube 28. The valve 50 includes a deflector rib 61 formed on the inside surface thereof and which serves to provide a camming action to open the valve upon insertion of a siphoning hose, indicated in dashed outline and denoted by reference numeral 62 in FIG. 3. The end of hose 62 slides along the rib 34 and contacts the rib 61 effecting pivoting of the valve 50 about the trunnions 56 in slot 38 to the position shown in dashed outline in FIG. 3. Ribs 34 and 61 serve to direct the siphoning hose away from seal 52 thereby preventing the base from catching on or damaging the hose.

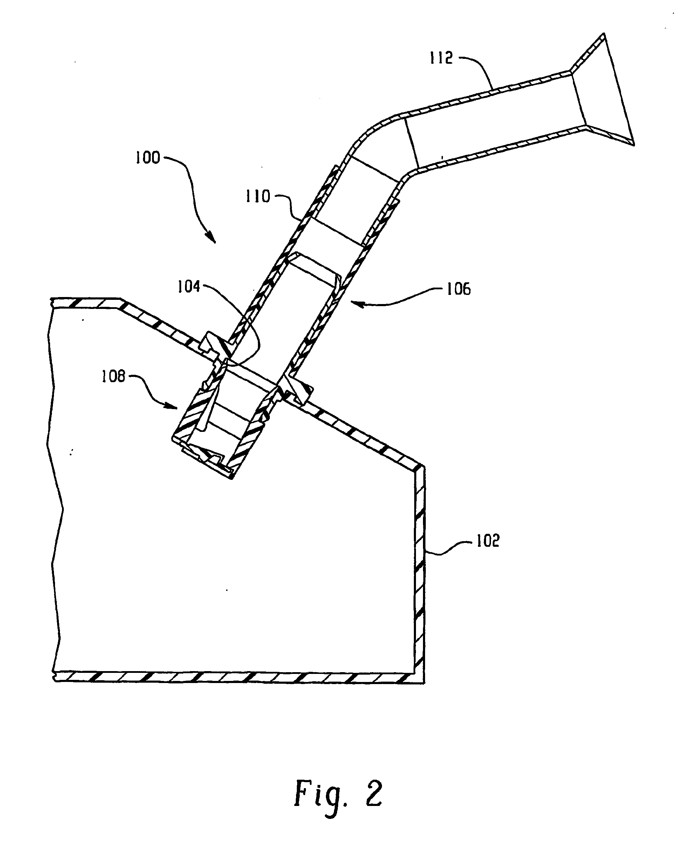

Referring to FIG. 2, an alternate system indicated generally at 100 employing the present invention is illustrated as a plastic fuel tank 102 having an FIG. 3. Ribs 34 and 61 serve to direct the siphoning hose away from seal 52 thereby preventing the base from catching on or damaging the hose.

Referring to FIG. 2, an alternate system indicated generally at 100 employing the present invention is illustrated as a plastic fuel tank 102 having an access opening 104 formed in a portion of the upper wall thereof through which is inserted a filler tube assembly indicated generally at 106 which includes a one-way or check valve assembly indicated generally at 108 and a hose 110 with the lower end thereof received over a portion of the valve assembly extending externally of the tank; and, a filler nozzle receptacle tube 112 adapted for connection to the vehicle structure is attached to the upper end of hose 110.

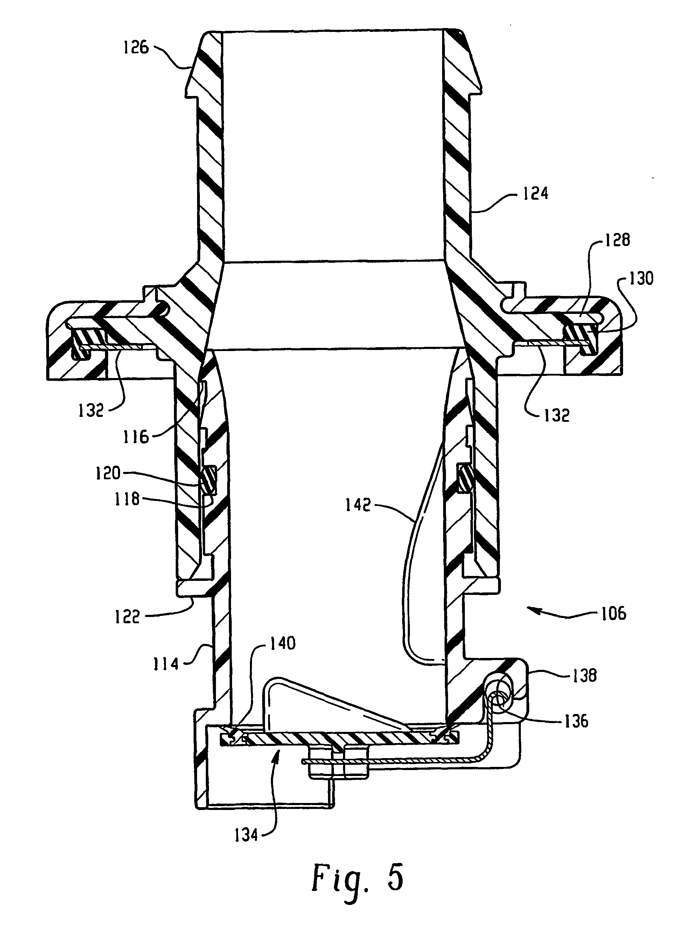

Referring to FIG. 5, the one-way valve assembly 108 is shown in enlarged detail as having a valve body with a generally tubular configuration as denoted by reference numeral 114 with the upper end thereof having an annular barb 116 formed thereon and a seal ring groove 118 formed therein intermediate the ends thereof with a seal ring 120 received therein. An annular flange 122 may be formed about the outer periphery of the tubular member 114 intermediate the seal groove 118 and the lower end of the tube.

A mounting member 124 preferably with an elongated tubular configuration has one end thereof sized and configured to be received over the annular barb 116 of valve tube 114; and, the tubular mounting member 124 has the inner periphery thereof sealing over the ring 120 on the valve tube 114. Preferably the lower end of the tubular member 124 is registered against one axial face of the flange 122. The upper end of the tubular member 124 or end opposite the flange 122, may have an annular barb 126 formed thereon for engaging the end of the hose 110 (FIG. 2) in fluid sealing engagement.

The annular mounting member or tube 124 has a radially outwardly extending flange 128 formed about the outer periphery thereof and located axially intermediate the ends of the member 124. However, it will be understood that the flange 128 may be located at other positions on the tubular member 124 as, for example, at the lower end thereof if desired.

The flange 128 has an annular seal member 130, preferably formed of elastomeric material, disposed about the periphery thereof adjacent the underside of the flange; and, the seal 130 may be retained thereon by a retaining ring 132 having its inner periphery frictionally engaging a shoulder 129 provided on the tubular member 124.

The flange 128 and seal ring 130 are provided with an overlayer or overmold 132 formed of material compatible with the tank 102 such that the overmold 132 may be attached and sealed to the tank by weldment upon insertion of the valve 106 through the access opening 104.

The tubular member 114 has a one-way valve member or flapper indicated generally at 134 which is pivoted about a slot 136 formed in a projection 138 provided on the tubular member 114. The valve member 134 has an annular seal 140 provided about the periphery thereof for sealing against the end of tube 114. Alternatively seal 140 may be mounted on the lower end of tube 114. It will be understood that the operation and construction of the valve 134 is similar to that of the valve 50 of the FIG. 3 embodiment. The tube 114 similarly has a hose deflecting rib 142 formed therein which is configured similarly to function identically as the rib 34 in the embodiment of FIG. 3. It will be apparent that the valve arrangement 108 of FIG. 5 thus permits the valve structure of the embodiment 18 of FIG. 3 to be mounted in an adapter tube 124 and secured to a plastic fuel tank.

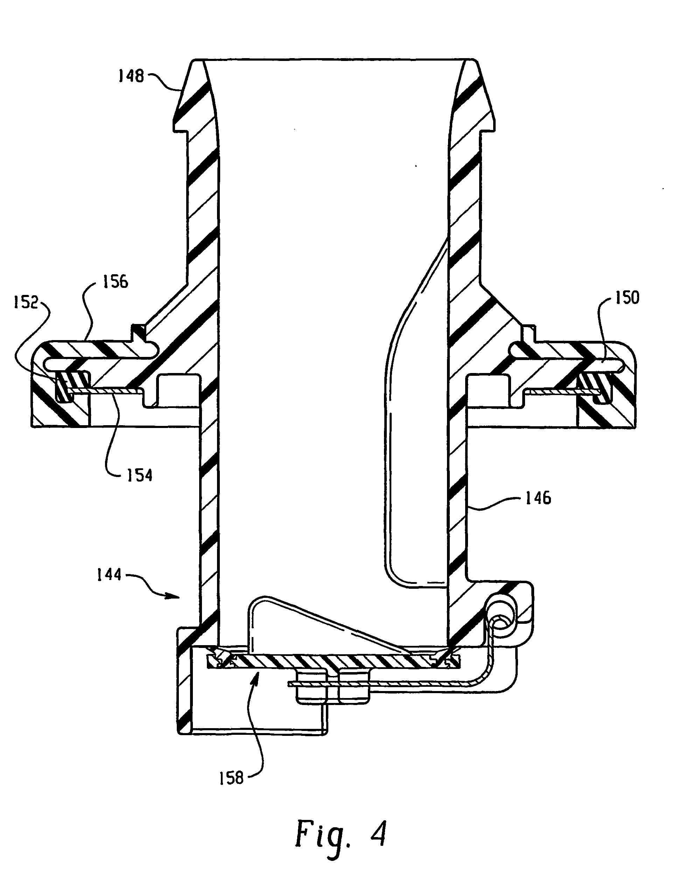

Referring to FIG. 4, an alternate embodiment of a one-way valve assembly for attachment to a plastic fuel tank is illustrated generally at 144 and includes a tubular valve body 146 preferably formed as an integral one-piece member with the upper end thereof provided with an annular barb 148 which is intended to be received in the lower end of the hose 110 of the FIG. 2 system arrangement.

The tubular valve body 146 has an annular radially outwardly extending flange 150 provided thereon and preferably formed integrally therewith. A seal ring, preferably formed of elastomeric material, denoted by reference numeral 152 is disposed about the outer periphery of the flange 150 on the underside thereof and may be retained in position thereon by a retaining ring 154 which may frictionally engage an annular shoulder 151 provided on the flange 150. Seal 152 and flange 150 are provided with an overlay 156 preferably formed by overmolding with material compatible with the plastic fuel tank 102 to facilitate attachment thereto as, for example, by weldment in a manner similar to the embodiment of FIG. 5.

A one-way valve indicated generally at 158 is provided on the lower end of the tubular member 146; and, it will be understood that the valve member 158 may be identical to the valve members 50, 134 of the embodiments of FIGS. 3 and 5. The hose 110 is assembled over the barb 148 and tube 112 received in the upper end of hose 110. The assembly of valve 144 and hose 110 and nozzle receptacle 112 is then installed in the access opening in the tank and secured by weldment of overmold 156 to the tank. Thus, the valve 144 of FIG. 4 is installed and functions in the same manner as the valve of FIG. 5.

The present invention thus provides a simple and easy to manufacture filler tube assembly including a common one-way valve for installation on either a metal or plastic fuel tank. The one-way valve is configured internally with ribs to deflect a siphon hose inserted through the filler tube so that the siphon hose opens the one-way valve and passes through into the interior of the fuel tank.

Although the invention has hereinabove been described with respect to the illustrated embodiments, it will be understood that the invention is capable of modification and variation and is limited only by the following claims.

## Claims

1. A one-way valve assembly for a fuel tank filler neck comprising:
(a) a tubular shell (28) having a valve seating surface formed about one end thereof and having a reduced exterior diameter portion (30) on the end opposite said one end and adapted for insertion in the end of an existing filler neck and having a recess (38) formed therein adjacent said one end;
(b) a moveable valve member (50) hingedly disposed for movement with respect to said one end of said tubular shell;
(c) a spring (48) disposed to have one end thereof contacting said recess in said shell and having the end (41) opposite said one end secured to said valve member, wherein said spring is operative to bias and maintain said valve member into contact with said valve seating surface; and,
(d) a shield or shroud (58) partially circumferentially extending about the one end opening of said tubular shell (28) and about said valve member (50); and
(e) a flexible annular seal (52) disposed to seal between said valve member and said valve seating surface,
wherein said valve member includes a rib (61) extending upwardly therefrom for deflecting a siphon hose (62) upon insertion therein from said annular seal.

2. The assembly defined in claim 1 wherein said valve member (50) is mounted on said spring for limited lost motion for self alignment with said valve seating surface.

3. The assembly defined in claim 1 wherein said annular seal (52) is attached to said valve member for movement therewith.

4. The assembly defined in claim 1, wherein the recess (38) is a slot and said spring comprises a torsion spring with coil portion (48) thereof received in the slot (38).

5. The assembly defined in claim 4 wherein said slot is sized to permit limited transverse movement of said coils with respect thereto.

6. The assembly defined in claim 1 wherein said tubular shell and said valve member are formed of plastic material and said annular seal is formed of elastomeric material.

7. The assembly defined in claim 6 wherein said plastic material is interspersed with electrically conductive material for facilitating discharge of accumulated static electrical charge.

8. The assembly defined in claim 1 wherein said valve member is attached to said tubular shell for pivotal movement.

9. The assembly defined in claim 1, wherein said valve member is moveable from a position contacting said valve seating surface to an open position by insertion of a siphon hose (62) through said reduced diameter end of said tubular shell.

10. The assembly defined in claim 1, wherein said spring comprises a torsion spring with at least one coil formed thereon.

11. The assembly defined in claim 1, wherein the recess of said tubular shell is a slot (38) formed thereon with portions (56) of said valve member received therein and permitting axial movement for facilitating seating of said valve member on said opposite end of said tubular shell.

12. The assembly defined in claim 1, wherein said spring has one end (41) thereof contacting said valve member in the center thereof.

13. The assembly defined in claim 12, wherein said valve member has a V-shaped groove (60) with said one end of said spring nested therein for centering said spring contact with said valve member.

14. The assembly defined in claim 1, wherein said valve member includes a pair of arms (54) extending therefrom with end portions thereof pivotally engaging said tubular shell.

15. The assembly defined in claim 1, wherein said tubular member includes an inwardly extending rib (34) for guiding a siphon hose upon insertion therein.

## Patentansprüche

1. Einweg-Ventileinrichtung für einen Kraftstofftankeinfüllstutzen, die aufweist:
(a) einen rohrförmigen Mantel (28) mit einer über einem Ende von diesem ausgebildeten Ventilsitzfläche und mit einem einen reduzierten Außendurchmesser aufweisenden Abschnitt (30), der an dem von dem einen Ende entgegengesetzten Ende vorgesehen und dazu eingerichtet ist, in das Ende eines vorhandenen Einfüllstutzens eingeführt zu werden, und der eine Ausnehmung (38) aufweist, die darin in der Nähe des einen Endes ausgebildet ist;
(b) ein bewegbares Ventilelement (50), das für eine Bewegung in Bezug auf das eine Ende des rohrförmigen Mantels gelenkig gelagert ist;
(c) eine Feder (48), die derart angeordnet ist, dass ihr eines Ende mit der Ausnehmung in dem Mantel in Kontakt steht und dass das zu dem einen Ende gegenüberliegende Ende (41) an dem Ventilelement gesichert ist, wobei die Feder dazu dient, das Ventilelement vorzuspannen und mit der Ventilsitzfläche in Berührung zu halten; und
(d) eine Abschirmung oder Ummantelung (58), die sich über einen Abschnitt in Umfangsrichtung um die eine Stirnöffnung des rohrförmigen Mantels (28) und um das Ventilelement (50) erstreckt; sowie
(e) eine elastische ringförmige Dichtung (52), die derart angeordnet ist, um zwischen dem Ventilelement und der Ventilsitzfläche eine Abdichtung zu schaffen,
wobei das Ventilelement eine Rippe (61) enthält, die sich von diesem nach oben erstreckt, um einen Heberschlauch (62) beim Einführen in das Ventilelement von der Ringdichtung abzulenken.

2. Einrichtung nach Anspruch 1, wobei das Ventilelement (50) an der Feder mit begrenztem Spiel bewegbar montiert ist, um sich in Bezug auf die Ventilsitzfläche selbst auszurichten.

3. Einrichtung nach Anspruch 1, wobei die Ringdichtung (52) an dem Ventilelement derart befestigt ist, um gemeinsam mit diesem bewegt zu werden.

4. Einrichtung nach Anspruch 1, wobei die Ausnehmung (38) durch einen Schlitz gebildet ist und die Feder eine Torsionsfeder aufweist, deren Wicklungsabschnitt (48) in dem Schlitz (38) aufgenommen ist.

5. Einrichtung nach Anspruch 4, wobei der Schlitz derart bemessen ist, um eine begrenzte Querbewegung der Wicklungen in Bezug auf diesen zuzulassen.

6. Einrichtung nach Anspruch 1, wobei der rohrförmige Mantel und das Ventilelement aus Kunststoff ausgebildet sind und die Ringdichtung aus einem Elastomer gebildet ist.

7. Einrichtung nach Anspruch 6, wobei in dem Kunststoffmaterial ein elektrisch leitendes Material eingefügt ist, um die Ableitung akkumulierter statischer elektrischer Ladung zu erleichtern.

8. Einrichtung nach Anspruch 1, wobei das Ventilelement an dem rohrförmigen Mantel verschwenkbar angebracht ist.

9. Einrichtung nach Anspruch 1, wobei das Ventilelement von einer Stellung, in der es mit der Ventilsitzfläche in Berührung steht, durch Einführung eines Heberschlauchs (62) durch das einen verminderten Durchmesser aufweisende Ende des rohrförmigen Mantels in eine offene Stellung überführbar ist.

10. Einrichtung nach Anspruch 1, wobei die Feder eine Torsionsfeder mit wenigstens einer daran ausgebildeten Wicklung aufweist.

11. Einrichtung nach Anspruch 1, wobei die Ausnehmung des rohrförmigen Mantels durch einen darin ausgebildeten Schlitz (38) gebildet ist, wobei Abschnitte (56) des Ventilelementes darin aufgenommen sind und eine Axialbewegung ausführen können, um ein Aufsitzen des Ventilelementes an dem gegenüberliegenden Ende des rohrförmigen Mantels zu erleichtern.

12. Einrichtung nach Anspruch 1, wobei ein Ende (41) der Feder mit dem Ventilelement in dessen Zentrum in Kontakt steht.

13. Einrichtung nach Anspruch 12, wobei das Ventilelement eine V-förmige Nut (60) aufweist, in der ein Ende der Feder eingefügt ist, um den Federkontakt mit dem Ventilelement zu zentrieren.

14. Einrichtung nach Anspruch 1, wobei das Ventilelement zwei von diesem vorragende Arme (54) enthält, deren Endabschnitte schwenkbar mit dem rohrförmigen Mantel verbunden sind.

15. Einrichtung nach Anspruch 1, wobei das rohrförmige Element eine nach innen ragende Rippe (84) zur Führung eines Heberschlauchs, wenn dieser darin eingeführt wird, aufweist.

## Revendications

1. Ensemble de clapet de non-retour pour un goulot de remplissage de réservoir de carburant comprenant :
(a) une enveloppe tubulaire (28) ayant une surface de siège de clapet formée autour de sa première extrémité et ayant une partie de diamètre extérieur réduit (30) sur l'extrémité opposée à ladite première extrémité et adaptée pour introduction dans l'extrémité d'un goulot de remplissage existant ayant un évidement (38) formé dans celui-ci adjacent à ladite première extrémité ;
(b) un élément de clapet mobile (50) disposé de manière articulée pour déplacement par rapport à ladite première extrémité de ladite enveloppe tubulaire ;
(c) un ressort (48) disposé pour avoir sa première extrémité contactant ledit évidement dans ladite enveloppe et ayant l'extrémité (41) opposée à ladite première extrémité fixée au dit élément de clapet, dans lequel ledit ressort est fonctionnel pour solliciter et maintenir ledit élément de clapet en contact avec ladite surface d'appui de clapet ; et
(d) une protection ou épaulement (58) s'étendant partiellement de manière circonférentielle autour de l'ouverture de la première extrémité de l'enveloppe tubulaire (28) et autour dudit élément de clapet (50), et
(e) un joint d'étanchéité annulaire flexible (52) disposé pour étanchéification entre ledit élément de clapet et ladite surface d'appui de clapet,
dans lequel ledit élément de clapet inclut une nervure (61) s'étendant vers le haut depuis celui-ci pour dévier un tuyau souple de siphonnage (62) sur introduction dans celui-ci à partir dudit joint d'étanchéité annulaire.

2. Ensemble selon la revendication 1, dans lequel ledit élément de clapet (50) est monté sur ledit ressort pour un mouvement perdu limité pour auto-alignement avec ladite surface d'appui de clapet.

3. Ensemble selon la revendication 1, dans lequel ledit joint d'étanchéité annulaire (52) est fixé au dit élément de clapet pour déplacement avec celui-ci.

4. Ensemble selon la revendication 1, dans lequel l'évidement (138) est une encoche et ledit ressort comprend un ressort de torsion avec une partie de bobine (48) de celui-ci reçu dans l'encoche (38).

5. Ensemble selon la revendication 4, dans lequel ladite encoche est dimensionnée pour permettre un déplacement transversal limité desdites bobines par rapport à celle-ci.

6. Ensemble selon la revendication 1, dans lequel ladite enveloppe tubulaire et ledit élément de clapet sont formés de matière plastique et ledit joint d'étanchéité annulaire est formé d'un matériau d'élastomère.

7. Ensemble selon la revendication 6, dans lequel ladite matière plastique est interdispersée avec un matériau électriquement conducteur pour faciliter la décharge de la charge électrostatique accumulée.

8. Ensemble selon la revendication 1, dans lequel ledit élément de clapet est fixé à ladite enveloppe tubulaire pour mouvement pivotant.

9. Ensemble selon la revendication 1, dans lequel ledit élément de clapet est déplaçable à partir d'une position contactant ladite surface d'appui de clapet à une position ouverte par introduction d'un tuyau souple de siphonnage (62) à travers ladite extrémité de diamètre réduit de ladite enveloppe tubulaire.

10. Ensemble selon la revendication 1, dans lequel ledit ressort comprend un ressort de torsion avec au moins une bobine formée sur celui-ci.

11. Ensemble selon la revendication 1, dans lequel l'évidement de ladite enveloppe tubulaire est une encoche (38) formée sur celui-ci avec des parties (56) desdits éléments de clapet reçus dans celui-ci et permettant le déplacement axial pour faciliter l'appui dudit élément de clapet sur ladite extrémité opposée de ladite enveloppe tubulaire.

12. Ensemble selon la revendication 1, dans lequel ledit ressort comporte une première extrémité (41) de celui-ci contactant ledit élément de clapet à son centre.

13. Ensemble selon la revendication 12, dans lequel ledit élément de clapet comporte une rainure (60) en forme de V avec ladite première extrémité dudit ressort nichée dans celui-ci pour centrer ledit contact du ressort avec ledit élément de clapet.

14. Ensemble selon la revendication 1, dans lequel ledit élément de clapet inclut une paire de bras (54) s'étendant depuis celui-ci avec ses parties d'extrémité mettant en prise en pivot ladite enveloppe tubulaire.

15. Ensemble selon la revendication 1, dans lequel ledit élément tubulaire inclut une nervure (34) s'étendant vers l'intérieur pour guider un tuyau souple de siphonnage sur introduction dans celui-ci.
